# EUROPEAN PATENT APPLICATION

(11) **EP 3 554 163 A1**
(43) Date of publication of application: **16.10.2019**
(21) Application number: 17891059.2
(22) Date of filing: 21.12.2017
(51) Int. Cl.: H04W 72/04

(54) **SCHEDULING METHOD AND RELATED DEVICE**

(30) Priority: 13.01.2017 CN 201710025821
(71) Applicant: Huawei Technologies Co., Ltd., Longgang District Shenzhen, Guangdong 518129 (CN)
(72) Inventor: YU, Haifeng, Shenzhen Guangdong 518129 (CN); XIONG, Xin, Shenzhen Guangdong 518129 (CN); YU, Feng, Shenzhen Guangdong 518129 (CN)
(74) Representative: Epping - Hermann - Fischer
(86) International application number: PCT/CN2017/117768
(87) International publication number: WO 2018/130057

(57) **Abstract**

This application relates to the field of communications technologies. Specifically, this application provides a scheduling method. In the method, when a terminal needs to send service data of an ultra-reliable and low latency communications service, the terminal sends a scheduling request to a base station, where the scheduling request carries buffer information in a buffer state report sent by the terminal to the base station in an original scheduling procedure. Therefore, compared with an existing scheduling procedure, in the scheduling method provided in this application, no buffer state report needs to be sent to the base station, thereby reducing steps of the scheduling procedure, and reducing a scheduling latency. To achieve an inventive concept of reducing the steps of the scheduling procedure, this application further provides a scheduling method for simplifying steps of a scheduling procedure. In addition, to ensure practical application and implementation of the scheduling method, this application further provides a corresponding scheduling device.

## Description

This application claims priority to Chinese Patent Application No. 201710025821.4, filed with the Chinese Patent Office on January 13, 2017, and entitled "SCHEDULING METHOD AND RELATED DEVICE", which is incorporated herein by reference in its entirety.

### TECHNICAL FIELD

This application relates to the field of communications technologies, and more specifically, to a scheduling method and a related device.

### BACKGROUND

In the field of mobile communications, long term evolution (Long Term Evolution, LTE) is a commonly used communications technology. A scheduling procedure is required during communication using this communications technology, and the scheduling procedure may be referred to as an LTE scheduling procedure. In the LTE scheduling procedure, data can be transmitted between a base station (eNB) and a terminal (User Equipment, UE), to implement a communication service between the terminal and the base station.

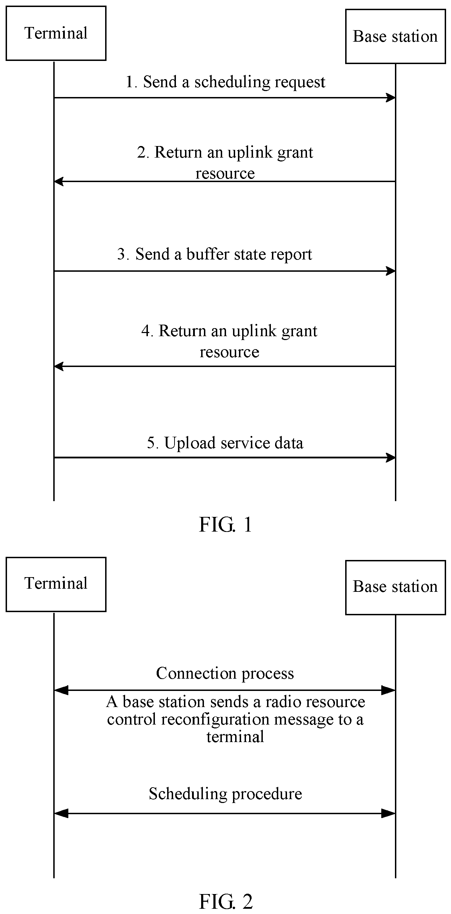

The LTE scheduling procedure specifically includes five steps shown in FIG. 1, which are: sending, by the terminal, a scheduling request (Scheduling Request, SR) to the base station; returning, by the base station, an uplink grant (Uplink Grant, UL grant) resource to the terminal; sending, by the terminal, a buffer state report (Buffer State Report, BSR) by using the uplink grant resource, where the buffer state report carries a data volume of to-be-sent service data; returning, by the base station, an uplink grant resource corresponding to the data volume to the terminal; and sending, by the terminal, the service data by using the uplink grant resource.

Currently, a development trend of the communication service is rapid and efficient sending of service data. However, in the existing LTE scheduling procedure used by the communication service, there are a relatively large quantity of signaling interactions, and a latency is relatively high. Therefore, a latency requirement of a latency-sensitive communication service cannot be met.

### SUMMARY

According to an aspect, this application provides a scheduling method, including: sending a scheduling indication to a base station if there is to-be-sent service data on a target logical channel, where the target logical channel is a logical channel specified by the base station or a terminal, and the scheduling indication is used to instruct the base station to allocate an uplink grant resource to the target logical channel in a preset allocation manner; and receiving the uplink grant resource sent by the base station. In this method, the terminal may send the scheduling indication to the base station, to instruct the base station to allocate the uplink grant resource to the terminal in a preset accelerated allocation manner, thereby simplifying a step related to uplink grant resource allocation in an existing scheduling procedure, and reducing a latency of the existing scheduling procedure.

In a possible design, the sending a scheduling indication to a base station includes: sending a scheduling request to the base station, where the scheduling request carries the scheduling indication by using a bit. In this method, the scheduling indication is carried in the scheduling request in an explicit manner by adding a bit, and a sending manner of the scheduling indication is relatively simple and easy to implement.

In a possible design, the sending a scheduling indication to a base station includes: sending a scheduling request to the base station based on a preset scheduling request sending cycle, where the preset scheduling request sending cycle is less than a scheduling request sending cycle of a logical channel other than the target logical channel. In this method, that the terminal sends the scheduling request based on the preset scheduling request sending cycle implicitly indicates that the terminal sends the scheduling indication to the base station, and no bit needs to be added to the scheduling request, thereby reducing a resource consumed for sending the scheduling request.

In a possible design, the sending a scheduling indication to a base station includes: sending a buffer state report to the base station, where the buffer state report carries the scheduling indication by using a bit. In this method, the scheduling indication is carried in the buffer state report in an explicit manner by using a bit, and a sending manner of the scheduling indication is relatively simple and easy to implement.

In a possible design, the sending a scheduling indication to a base station includes: sending a buffer state report to the base station at a preset location on a physical uplink shared channel. In this method, that the terminal sends the buffer state report at the preset location on the physical uplink shared channel implicitly indicates that the terminal sends the scheduling indication to the base station, and no bit needs to be added to the buffer state report, thereby reducing a resource consumed for sending the buffer state report.

According to another aspect, this application provides a scheduling method, including: generating a scheduling request if there is to-be-sent service data on a target logical channel, where the target logical channel is a logical channel specified by a base station or a terminal, and the scheduling request includes buffer state information; sending the scheduling request to the base station, where the buffer state information in the scheduling request is used by the base station to allocate an uplink grant resource; and receiving the uplink grant resource sent by the base station.

In a possible design, the buffer state information includes data volume indication information, and the data volume indication information includes: a data volume value of the service data; or a data volume index of the service data, where the data volume index is used to indicate a data volume range of the service data.

According to another aspect, this application provides a scheduling method, including: sending a buffer state report to a base station by using a preconfigured uplink resource if there is to-be-sent service data on a target logical channel, where the target logical channel is a logical channel specified by the base station or a terminal, and the buffer state report is used by the base station to allocate an uplink grant resource to the target logical channel; and receiving the uplink grant resource sent by the base station. In this method, the buffer state report is sent by using the preconfigured uplink resource, so that a step of requesting an uplink resource from the base station is omitted, thereby reducing a latency of an existing scheduling procedure.

In a possible design, the sending a buffer state report to a base station by using a preconfigured uplink resource includes: sending the same buffer state report to the base station for a plurality of times by using the preconfigured uplink resource. In this method, sending the buffer state report for a plurality of times can increase a success rate of receiving the buffer state report by the base station.

According to another aspect, this application provides a scheduling method, including: continuously detecting, after a detection instruction is received, whether there is to-be-sent service data on a target logical channel of the terminal, where the target logical channel is a logical channel specified by a base station or the terminal; enabling a preset first scheduling mode if there is to-be-sent service data on the target logical channel, where the first scheduling mode is a scheduling mode for sending a scheduling request, and the scheduling request carries any one or more of the following: a scheduling indication, buffer state information, and a type of the service data; and switching the first scheduling mode to a preset second scheduling mode if enabled duration of the first scheduling mode reaches first preset duration, where the second scheduling mode is a scheduling mode for sending a buffer state report to the base station by using a prestored uplink resource. In this method, resources used in the first scheduling mode are limited resources. Therefore, switching between the first scheduling mode and the second scheduling mode can alleviate a tight demand of the first scheduling mode for the limited resources.

In a possible design, the scheduling method further includes: after the first scheduling mode is enabled, disabling the first scheduling mode if there is no longer to-be-sent service data on the target logical channel and duration without the service data reaches second preset duration.

In a possible design, the scheduling method further includes: after the first scheduling mode is disabled, enabling the first scheduling mode if it is detected that there is to-be-sent service data on the target logical channel.

According to another aspect, this application provides a scheduling method, including: receiving a scheduling indication sent by a terminal, where the scheduling indication is sent when there is to-be-sent service data on a target logical channel of the terminal, and the target logical channel is a logical channel specified by the base station or the terminal; and allocating an uplink grant resource to the target logical channel in a preset allocation manner. This method is applied to a side of the base station, and after the scheduling indication is received, the uplink grant resource is rapidly allocated to the terminal, thereby simplifying a step related to uplink grant resource allocation in an existing scheduling procedure, and reducing a latency of the existing scheduling procedure.

In a possible design, the allocating an uplink grant resource to the target logical channel in a preset allocation manner includes: separately allocating the uplink grant resource to the target logical channel; or allocating the uplink grant resource to the target logical channel after a preset short-time interval, where the short-time interval indicates that a time interval of the target logical channel for obtaining the uplink grant resource is shorter than a time interval of another logical channel; or preferentially allocating the uplink grant resource to the target logical channel after uplink grant resource allocation requests corresponding to a plurality of logical channels are received; or allocating, based on a data volume of service data on the target logical channel, more uplink grant resources to the target logical channel than to the data volume.

According to another aspect, this application provides a scheduling configuration method, where the method includes: determining a logical channel that uses a preset scheduling mode; and sending an identifier of the preset scheduling mode and an identifier of the logical channel to a terminal, where the preset scheduling mode is any one of the following three modes: a first scheduling mode, a second scheduling mode, and a mode switching between the first scheduling mode and the second scheduling mode, the first scheduling mode is a scheduling mode in which a base station receives a scheduling request sent by the terminal, the scheduling request carries any one or more of the following: a scheduling indication, buffer state information, and a type of the service data, and the second scheduling mode is a scheduling mode in which the base station receives a buffer state report sent by the terminal by using a prestored uplink resource. This method is a configuration method performed before a scheduling method, so that the terminal can perform scheduling based on a configured scheduling mode, thereby reducing a latency of an existing scheduling method.

In a possible design, the sending an identifier of the preset scheduling mode and an identifier of the logical channel to the terminal includes: sending a logical channel connection reconfiguration message to the terminal, where the logical channel connection reconfiguration message includes the identifier of the preset scheduling mode and the identifier of the logical channel; or sending a physical downlink control channel resource to the terminal, where the physical downlink control channel resource includes the identifier of the preset scheduling mode and the identifier of the logical channel; or sending a medium access control element to the terminal, where the medium access control element includes the identifier of the preset scheduling mode and the identifier of the logical channel.

According to another aspect, this application provides a scheduling configuration method, including: receiving an identifier of a preset scheduling mode and an identifier of a logical channel that are sent by a base station, where the preset scheduling mode is any one of the following three modes: a first scheduling mode, a second scheduling mode, and a mode switching between the first scheduling mode and the second scheduling mode, the first scheduling mode is a scheduling mode in which a terminal sends a scheduling request to the base station, the scheduling request carries any one or more of the following: a scheduling indication, buffer state information, and a type of the service data, and the second scheduling mode is a scheduling mode in which the terminal sends a buffer state report to the base station by using a prestored uplink resource; and determining the logical channel corresponding to the identifier of the logical channel as a target logical channel, and determining a scheduling mode corresponding to the identifier of the preset scheduling mode as the scheduling mode used by the terminal. This method is a configuration method performed before a scheduling method, so that the terminal can perform scheduling based on a configured scheduling mode, thereby reducing a latency of an existing scheduling method.

According to another aspect, this application provides a terminal, and the terminal has a function of implementing the foregoing scheduling method that is applied to a terminal. The function may be implemented by hardware, or may be implemented by hardware executing corresponding software. The hardware or software includes one or more modules corresponding to the foregoing function.

According to another aspect, this application provides a terminal, and the terminal has a function of implementing the foregoing scheduling configuration method that is applied to a terminal. The function may be implemented by hardware, or may be implemented by hardware executing corresponding software. The hardware or software includes one or more modules corresponding to the foregoing function.

According to another aspect, this application provides a base station, and the base station has a function of implementing the foregoing scheduling method that is applied to a base station. The function may be implemented by hardware, or may be implemented by hardware executing corresponding software. The hardware or software includes one or more modules corresponding to the foregoing function.

According to another aspect, this application provides a base station, and the base station has a function of implementing the foregoing scheduling configuration method that is applied to a base station. The function may be implemented by hardware, or may be implemented by hardware executing corresponding software. The hardware or software includes one or more modules corresponding to the foregoing function.

According to another aspect, this application provides a terminal, and the terminal includes the foregoing processor and a communications interface. The processor can implement a function of a processing module applied to the terminal. The communications interface can implement a function of a sending module and/or a receiving module applied to the terminal.

According to another aspect, this application provides a base station, and the base station includes the foregoing processor and a communications interface. The processor can implement a function of a processing module applied to a terminal. The communications interface can implement a function of a sending module and/or a receiving module applied to a terminal.

According to another aspect, this application provides a communications system, and the communications system includes the terminal and the base station according to the foregoing aspects.

According to another aspect, this application provides a computer storage medium, configured to store computer software instructions used by the foregoing terminal. The computer storage medium contains a program designed for executing the foregoing aspects.

According to another aspect, this application provides a computer storage medium, configured to store computer software instructions used by the foregoing base station. The computer storage medium contains a program designed for executing the foregoing aspects.

According to the technical solutions provided in this application, the existing scheduling procedure is simplified, thereby reducing the latency of the existing scheduling procedure, and ensuring rapid and efficient sending of a communication service.

### BRIEF DESCRIPTION OF DRAWINGS

To describe the technical solutions in the embodiments of this application or in the prior art more clearly, the following briefly describes the accompanying drawings required for describing the embodiments or the prior art.
FIG. 1 is a schematic flowchart of an existing LTE scheduling procedure;
FIG. 2 is a schematic diagram of connection and scheduling interaction between a terminal and a base station according to this application;
FIG. 3 is a flowchart of Embodiment 1 of a scheduling method according to this application;
FIG. 4 is a flowchart of Embodiment 2 of a scheduling method according to this application;
FIG. 5 is a flowchart of Embodiment 3 of a scheduling method according to this application;
FIG. 6 is a flowchart of Embodiment 4 of a scheduling method according to this application;
FIG. 7 is a flowchart of a BSR repeated sending mode according to this application;
FIG. 8 is a flowchart of Embodiment 5 of a scheduling method according to this application;
FIG. 9 is a flowchart of a scheduling configuration method according to this application;
FIG. 10 is a schematic structural diagram of hardware of a terminal according to this application; and
FIG. 11 is a schematic structural diagram of hardware of a base station according to this application.

### DESCRIPTION OF EMBODIMENTS

Currently, a development trend of communication services is an ultra-reliable and low latency communications (Ultra-Reliable and Low Latency Communications, URLLC) service. This service has a relatively high latency requirement. It should be noted that, the URLLC service is a type of service instead of a specific service. This type of service requires a relatively low latency in a communication process. Therefore, any communication service having a latency requirement falls within the protection scope of this application. For ease of description, the following describes the technical solutions of this application by using the URLLC service as an example.

A communication service between a base station and a terminal can be implemented in an LTE scheduling procedure. In a specific scenario of implementing the URLLC communication service, the LTE scheduling procedure cannot meet a low-latency requirement of the service. This is because in an existing LTE scheduling procedure, before the terminal uploads service data, control signaling needs to be exchanged between the terminal and the base station for a plurality of times, to configure a communication resource for uploading the service data.

FIG. 1 is a schematic flowchart of the existing LTE scheduling procedure. As shown in FIG. 1, the procedure specifically includes five steps.
Step 1: When having a communication service requirement, the terminal sends a scheduling request (Scheduling Request, SR) to the base station. The scheduling request SR has only one bit, for notifying the base station that the UE needs an uplink grant (Uplink Grant, UL grant).
Step 2: The base station sends a UL grant to the terminal, where the UL grant is used by the terminal to send a buffer state report (Buffer State Report, BSR).
Step 3: The terminal sends the BSR by using the UL grant, where the BSR is used to report a data volume of service data to be sent by the terminal.
Step 4: The base station allocates a UL grant to the terminal based on the BSR reported by the terminal and a scheduling algorithm, where the UL grant is used by the terminal to send the service data (where the service data may also be referred to as uplink data).
Step 5: The terminal sends the service data (Data) by using the UL grant.

The foregoing procedure relates to two uplink grants UL grants. For ease of distinguishing, the uplink grant UL grant for sending the BSR in step 2 is referred to as a first uplink grant (UL grant_1), and the uplink grant UL grant for sending the service data in step 4 is a second uplink grant (UL grant_2). In addition, the uplink grant may also be referred to as an uplink grant resource.

In the scheduling shown in FIG. 1, the base station needs to determine a size of the second uplink grant resource based on the data volume of the service data to be uploaded by the terminal. However, the terminal does not directly notify the base station of a data volume of to-be-sent data, but first notifies, by using step 1, the base station of a demand of the terminal that the terminal intends to send the service data, and after the base station sends the first uplink grant resource in step 2, the terminal uploads the data volume of the to-be-sent data by using the first uplink grant resource in step 3. In addition, the base station temporarily determines, in step 4 based on the data volume and the scheduling algorithm, the second uplink grant required by the terminal, and then delivers the second uplink grant to the terminal.

It can be learned that, before the terminal sends the service data to the base station, signaling interactions (including at least interactions in step 1 to step 4) need to be performed for a plurality of times. Table 1 shows latency data in the LTE scheduling procedure. It can be learned from Table 1 that, in each signaling interaction, the terminal and the base station need to take a particular processing time, and a larger quantity of times of signaling interactions causes a higher latency.

**Table 1**

| Number | Description | Transmission time interval (TTI) |
|---|---|---|
| 1 | Average time in which UE waits for a PUCCH (for sending an SR) | 0.5 |
| 2 | The UE sends an SR | 1 |
| 3 | An eNB decodes the SR, and generates an uplink grant (the UL grant in step 2) | 1 |
| 4 | The eNB delivers the uplink grant | 1 |
| 5 | UE processing time, including a time for decoding the uplink grant and a time for encoding a BSR | 1 |
| 6 | The UE sends the BSR | 1 |
| 7 | The eNB decodes the BSR, and generates an uplink grant (the UL grant in step 4) | 1 |
| 8 | The eNB delivers the uplink grant | 1 |
| 9 | UE processing time, including a time for decoding the uplink grant and a time for encoding uplink data | 1 |
| 10 | The UE sends the uplink data | 1 |

It can be learned from both FIG. 1 and Table 1 that, the latency of the scheduling procedure before the terminal sends the service data to the base station is relatively high. To resolve this problem, this application provides a scheduling method, to reduce a latency caused by a scheduling procedure, and then meet a latency requirement of an ultra-reliable low latency communications URLLC service in a scenario in which a terminal sends the service.

In the technical solution of this application, the latency of the existing scheduling procedure is reduced by simplifying steps of the scheduling procedure. Based on the concept, this application provides the following specific embodiments.

### Embodiment 1

In this embodiment, an SR sent by a terminal carries more information. These pieces of information are originally carried in a BSR to be used by a base station to generate an uplink grant (namely, a second uplink grant) for uploading service data. In this way, step 2 of sending a first uplink grant and step 3 of sending a BSR can be omitted, thereby a latency of a scheduling procedure is reduced.

It should be noted that, the terminal may add more information to the SR, and that the terminal has this function may be based on a configuration of the base station in a connection process before the scheduling procedure.

Specifically, before the scheduling procedure, the connection process is performed between the terminal and the base station. As shown in FIG. 2, in the connection process, the base station sends a radio resource control (Radio Resource Control, RRC) connection reconfiguration message to the terminal. The RRC connection reconfiguration message includes a configuration message for a logical channel. Different logical channels are used for different services. The base station may configure a logical channel used by a URLLC service, to be specific, add a configuration identifier to a configuration message of the logical channel used by the URLLC service. The configuration identifier is used to instruct the terminal to send the SR on the logical channel in an enhanced manner. In this way, when performing the scheduling procedure, the terminal encapsulates, according to an indication of the configuration identifier, more information into the SR to be sent to the base station. Certainly, if the terminal does not detect the configuration identifier in the RRC connection reconfiguration message, the terminal may send the SR in an existing manner.

In terms of the foregoing procedure, some technical details need to be described. The configuration identifier added to the configuration message of the logical channel may be in a form of an information element (Information Element, IE). A specific name of the information element IE may be logicalChannel-SR-Enhancement-mask-r15.

It should be noted that, a configuration indication sent by the base station to the terminal is not limited to the form of the configuration identifier added to the RRC connection reconfiguration message, and may alternatively be in another form. For example, the configuration identifier may be carried in a physical downlink control channel (Physical Downlink Control Channel, PDCCH) resource or in a MAC CE. The medium access control (Medium Access Control, MAC) control element (Control Element, CE) may be referred to as a medium access control element.

Further, the base station may not be limited to sending the configuration indication to the terminal in the connection process, and the base station may alternatively send the configuration indication to the terminal in another process before the scheduling procedure or in the scheduling procedure.

Still further, the terminal may implement the function, as described above, based on the configuration of the base station, or based on a configuration of the terminal. To be specific, the terminal generates a configuration indication for the logical channel on which the URLLC service is located, to instruct to send the SR on the logical channel in the enhanced manner.

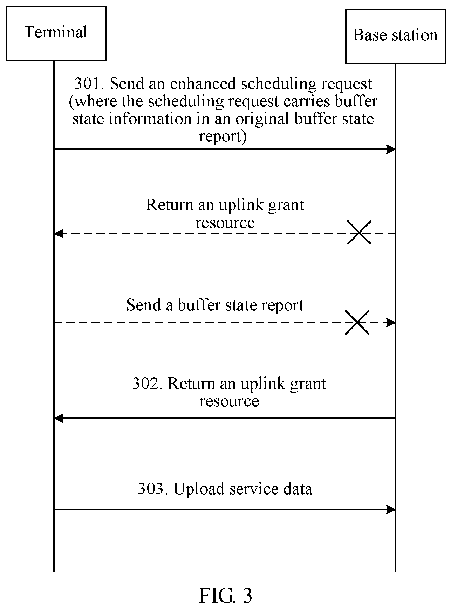

After the foregoing configuration, the terminal can send the SR in the enhanced manner. FIG. 3 shows a procedure of Embodiment 1 of a scheduling method according to this application. The scheduling method specifically includes step S301 to step S303.

S301: When the terminal needs to send URLLC service data, the terminal sends an enhanced SR to the base station, where the enhanced SR carries buffer state information in a BSR.

The terminal determines whether service data of a URLLC service needs to be sent. If the service data of the URLLC service needs to be sent, the terminal generates an SR to be reported to the base station. The service data of the URLLC service may be sent on a logical channel specified by the base station, or may not be sent on the logical channel specified by the base station.

The SR generated by the terminal includes more information than an existing SR shown in FIG. 1. Therefore, for ease of distinguishing, the SR generated in this embodiment may be referred to as an enhanced SR. The existing SR includes only one bit, and the bit is used to notify the base station that the terminal has service data to be sent. If buffer state information needs to be added to the SR, a bit may be added to the SR, and the added buffer state information is indicated by using the added bit.

Optionally, in addition to information indicating that the terminal has to-be-sent service data, the enhanced SR further carries the buffer state information originally carried in the BSR. The buffer state information originally carried in the BSR is the added buffer state information in the enhanced SR, and includes but is not limited to either of or a combination of two of the following: a data volume of the to-be-sent service data and an identifier of a logical channel (or a logical channel group).

The data volume of to-be-sent service data is used by the base station to calculate a size of the uplink grant resource (namely, the second uplink grant resource). The identifier of the logical channel group is used by the base station to determine whether the uplink grant resource is allocated to which logical channel group. These logical channel groups include logical channels for sending service data.

Optionally, the added buffer state information in the enhanced SR includes data volume indication information of the to-be-sent service data. The data volume indication information is used to indicate the data volume of the service data. Specifically, the data volume indication information may be in any one of the following forms:
1. A data volume level-1 index index.
   The base station stores a correspondence table of data volume level-1 indexes and data volume level-1 ranges. After receiving a data volume level-1 index index, the base station searches the correspondence table for a data volume level-1 range corresponding to the data volume level-1 index index, to determine an approximate data volume of the to-be-sent service data in the terminal.
   For example, if a value of an index carried in the enhanced SR is 3, and a data volume corresponding to the index 3 in the correspondence table is 300 to 400, the base station may determine that a data volume of the to-be-sent service data in the terminal falls within 300 to 400.
   It can be learned that, information provided for the base station by the data volume in such a form carried in the enhanced SR is of low accuracy, and the base station can only approximately determine the data volume of the to-be-sent service data.
2. A data volume level-1 index index and a data volume level-2 index sub-index.
   In addition to the foregoing correspondence table, the base station further stores a correspondence table of data volume level-2 indexes sub-indexes and data volume level-2 ranges. For ease of distinguishing, the former correspondence table may be referred to as a first correspondence table, and the latter correspondence table may be referred to as a second correspondence table. In addition to the data volume level-1 index index, the enhanced SR further includes a data volume level-2 index sub-index. The data volume level-2 index sub-index is used to provide data volume range information with more details.
   For example, if a value of the index carried in the enhanced SR is 3, and a value of the sub-index is 6, a data volume level-1 range found by the base station in a level-1 correspondence table based on the index 3 is 300 to 400, and a data volume level-2 range found in a level-2 correspondence table based on the sub-index 6 is 60 to 70, and then the base station determines that the data volume of the to-be-sent service data falls within 360 to 370.
   It can be learned that, adding the data volume in such a form to the enhanced SR can provide a more detailed data volume range searching basis for the base station, so that the base station can more accurately determine the data volume of the to-be-sent service data.
   The indexes in the foregoing two forms may be referred to as data volume indexes for short. The data volume index is used to indicate a data volume range. The data volume index may include several levels of indexes, and a data volume range indicated by each next-level index is more precise than a data volume range indicated by a previous-level index. The foregoing level-1 index and level-2 index are used as an example, the level-1 index indicates a data volume range in the hundreds place, and the level-2 index indicates a data volume range in the tens place. Alternatively, a level-3 index may be further included, and the level-3 index may indicate a data volume range in the ones place. Certainly, the data volume ranges indicated by the level-1 index, the level-2 index, and the level-3 index are not limited to the hundreds place, the tens place, and the ones place, but may alternatively be other value ranges in other unit places.
3. A specific data volume value.

The terminal stores the to-be-sent service data in a buffer, and records a data volume in the buffer buffer. The data volume is the data volume of the to-be-sent service data. The enhanced SR does not carry an index in the foregoing form, but carries a specific value of the data volume in the buffer buffer, for example, 365.

It can be learned that, adding the data volume in such a form to the enhanced SR can provide a most detailed basis for the base station, so that the base station can generate, based on the data volume, an uplink resource with a most accurate resource volume value. Compared with the foregoing two forms, this form is the most accurate, but bit overheads are the largest. In an actual application, a corresponding data form may be selected based on an actual need.

It should be noted that, this application provides the three specific forms of the data volume carried in the enhanced SR, but is not limited thereto. Any form that can provide data volume information with relatively more details for the base station can be used. In addition, the terminal may determine a form of a to-be-sent data volume, or the base station may determine the form. To be specific, the base station adds, to the RRC connection reconfiguration message sent to the terminal, an indication indicating a form of data volume to be used, so that the terminal determines, according to the indication, a form of data volume to be sent.

After generating the enhanced SR, the terminal may send the enhanced SR to the base station.

S302: The base station allocates a UL grant to the terminal based on the buffer state information carried in the enhanced SR.

The base station allocates an uplink grant resource UL grant to the terminal based on the buffer state information carried in the enhanced SR. The uplink grant resource is the foregoing second uplink grant resource, used by the terminal to upload the service data. In addition, the base station delivers the uplink grant resource UL grant to the terminal.

S303: The terminal uploads the service data by using the UL grant.

The terminal uploads the to-be-sent URLLC service data to the base station by using the uplink grant resource UL grant allocated by the base station.

It can be learned from the foregoing technical solution that, in this embodiment, a bit needs to be added to the SR, to carry more information. However, the terminal needs to send an SR by using a physical uplink control channel (Physical Uplink Control Channel, PUCCH) resource, and more bits in the SR indicate that more PUCCH resources need to be used. Therefore, this embodiment is applicable to a scenario in which PUCCH resources are extendible.

In this implementation, the enhanced SR generated by the terminal carries information required for scheduling. These pieces of information are originally included in a BSR for sending. In this embodiment, these pieces of information required for scheduling are added to the enhanced SR, so that step 2 of sending a UL grant and step 3 of sending a BSR in an existing scheduling procedure shown in FIG. 1 can be omitted (steps with dotted lines and crosses shown in FIG. 3 are omitted steps), thereby reducing a latency of the existing scheduling procedure.

In Embodiment 1, the enhanced SR generated by the terminal includes buffer state information in an original BSR, to omit step 2 and step 3 in the existing scheduling procedure. However, to simplify the existing scheduling procedure, in addition to omitting step 2 and step 3 in FIG. 1, processing processes of some steps may be further simplified. In this way, the latency of the existing scheduling procedure can also be reduced. Based on this, this application provides the following Embodiment 2 and Embodiment 3.

### Embodiment 2

An enhanced SR generated by a terminal may carry a high-priority scheduling indication (which may be referred to as a priority scheduling indication or a scheduling indication for short) of to-be-sent URLLC service data, so that a base station rapidly allocates a first uplink grant resource to the URLLC service data based on the high-priority scheduling indication, thereby simplifying a processing process of step 2 and/or step 3 in FIG. 1.

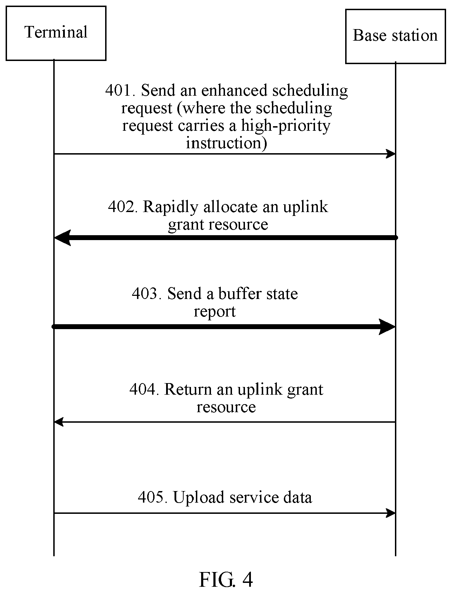

FIG. 4 shows a procedure of Embodiment 2 of a scheduling method according to this application. The scheduling method specifically includes step S401 to step S405.

S401: When a terminal needs to send URLLC service data, the terminal sends an enhanced SR to a base station, where the enhanced SR carries a high-priority scheduling indication set for the URLLC service data.

The base station may process various types of service data at the same time. If a type of service data has a high priority, the base station may perform an uplink grant resource allocation manner that is faster than that in the prior art for the service data. Therefore, the terminal may set a scheduling priority of the URLLC service data to a high priority, and when needing to send the URLLC service data, the terminal adds the high-priority scheduling indication to the enhanced SR, so that the base station rapidly allocates a second uplink grant resource to the URLLC service data. For a specific rapid allocation method, refer to a description of step S402.

In an actual application, that the SR carries the high-priority scheduling indication may be implemented in the following explicit manner or implicit manner.

First, the enhanced SR explicitly carries the high-priority scheduling indication of the to-be-sent service data. To be specific, the enhanced SR carries the scheduling indication by using a bit.

Specifically, a bit indicating a priority is added to the enhanced SR, and a value of the bit is set to high. Priority indications may include only two types: high and low. If a priority indication of the URLLC service data is high, a priority indication of another service data is low. Still further, a value of a bit may be set to a priority value. For example, a natural number is used to indicate the priority value, and a smaller value indicates a higher priority. Therefore, if the priority of the URLLC service data is intended to be set to highest, the priority indication of the URLLC service data may be set to 0.

Second, the enhanced SR implicitly carries the high-priority scheduling indication of the to-be-sent service data.

Specifically, the terminal establishes a plurality of logical channels with the base station, and different logical channels are used to send different service data. Each logical channel of the terminal continuously sends an SR based on a particular sending cycle, and the sending cycle may be referred to as an SR sending cycle (namely, a scheduling request sending cycle).

Sending cycles of all existing logical channels are the same. In this embodiment, a logical channel used by the URLLC service data may be reduced in advance, so that an SR sending cycle of the URLLC service data is shorter than an SR sending cycle of another piece of service data, to represent processing urgency of the URLLC service data. The reduced SR sending cycle may be referred to as a preset scheduling request sending cycle. The preset scheduling request sending cycle is shorter than a scheduling request sending cycle corresponding to a service other than a URLLC service. The base station may have an agreement with the terminal through a protocol that, a shorter sending cycle of an SR indicates a higher priority of to-be-sent service data corresponding to the SR.

After reducing the SR sending cycle, the terminal may implicitly indicate, to the base station by sending an SR, a high priority of to-be-sent service data corresponding to the SR, and may reduce a time for waiting for an uplink grant resource by the to-be-sent service data, thereby reducing a latency caused by resource waiting.

A length of the SR sending cycle may be set by the terminal, or may be set by the base station. If the length of the SR sending cycle is set by the base station, the base station may configure the SR sending cycle in a connection process before a scheduling procedure. For example, the base station adds the SR sending cycle to an RRC connection reconfiguration message and sends the RRC connection reconfiguration message to the terminal. The SR sending cycle is a sending cycle indicating that the priority of the to-be-sent service data is relatively high.

In a first manner, a bit is added to the enhanced SR sent by the terminal, to explicitly notify the base station that the priority of the to-be-sent service data is relatively high. The second manner, the terminal does not directly notify the base station of the foregoing information, but instead, implicitly indicate the high priority of the to-be-sent service data by using a relatively short SR sending cycle. In an actual application, any one of the foregoing manners may be selected to report the high-priority scheduling indication of the to-be-sent service data to the base station.

After generating the enhanced SR, the terminal sends the enhanced SR to the base station, and the enhanced SR is sent based on a particular sending cycle. If the enhanced SR carries the high-priority scheduling indication of the to-be-sent service data in the foregoing second manner, namely, the implicit manner, the sending cycle of the enhanced SR is inevitably shorter than a sending cycle of another service data.

S402: The base station allocates a UL grant to the terminal in a rapid allocation manner based on the high-priority scheduling indication carried in the enhanced SR. The UL grant is used by the terminal to upload a BSR.

If the enhanced SR carries the high-priority scheduling indication in the explicit manner, after receiving an SR, the base station may detect whether the SR includes a priority indication and a bit with the priority indication being high. If yes, it indicates that the SR is the enhanced SR carrying the high-priority scheduling indication. If the terminal adds the high-priority scheduling indication in the implicit manner, after receiving an SR, the base station determines a sending cycle of the SR, and if the sending cycle is relatively shorter than a sending cycle of another SR, the base station may determine that the SR is the enhanced SR carrying the high-priority scheduling indication.

After determining that the enhanced SR is received, the base station allocates the first uplink grant resource to the terminal in a preset accelerated allocation manner. The rapid allocation manner is implemented based on the high-priority scheduling indication, and may include any one or combination of more than one of the following four manners. It should be noted that, there is no conflict between a plurality of combination manners. Therefore, the four manners may be combined for use.
1. A first rapid allocation manner is separate allocation, to be specific, an uplink grant resource is separately allocated to the service data with the high-priority scheduling indication.
   Specifically, in an existing uplink grant resource allocation manner, the terminal reports a sum of data volumes of to-be-sent service data on a plurality of logical channels to the base station, and the base station generates an uplink grant resource based on the sum of the data volumes and delivers the uplink grant resource to the terminal. After receiving the uplink grant resource, the terminal reallocates, based on a requirement of each logical channel, the uplink grant resource to each logical channel for use.
   However, the base station in this embodiment may separately allocate an uplink grant resource to the logical channel on which the URLLC service data is located. In other words, after generating the uplink grant resource for the URLLC service data, the base station indicates that an allocation object of the uplink grant resource is the logical channel on which the URLLC service data is located. In this way, after receiving the uplink grant resource, the terminal may directly allocate, based on the allocation object corresponding to the uplink grant resource, the uplink grant resource to the logical channel on which the URLLC service data is located. The allocation object may be specifically indicated in various manners such as adding an allocation object identifier.
   In the separate allocation manner, a reallocation process (the reallocation process is included in an original scheduling procedure, and is specifically included in step 3 of the original scheduling procedure) of the terminal for the received uplink grant resource may be omitted, thereby simplifying a processing process of step 3 in the original scheduling procedure, and further reducing a latency of the scheduling procedure.
2. A second rapid allocation manner is reducing an interval between sending of uplink and downlink data. To be specific, after receiving the enhanced SR sent by the terminal, the base station reduces to a time interval for sending an uplink grant resource to the terminal.
   Specifically, after receiving the enhanced SR uploaded by the terminal, the base station sends an uplink grant resource corresponding to the enhanced SR to the terminal after a preset time interval. For example, the base station receives the enhanced SR at a moment n, and the preset time interval is 4. In this case, the base station sends an uplink grant resource to the terminal at a moment n+4. In this embodiment, the time interval is reduced. For example, the time interval is reduced from 4 to 2. In this way, the base station can more rapidly send the uplink grant resource to the terminal. This also indicates that the terminal can rapidly obtain the uplink grant resource. For ease of description, the time interval may be referred to as a preset short-time interval, indicating that a time interval for obtaining an uplink grant resource by the URLLC service is shorter than a time interval of another service.
   With reference to the existing scheduling procedure shown in FIG. 1, the rapid allocation manner can shorten a processing process of delivering a UL grant in step 2 of the scheduling procedure.
3. A third rapid allocation manner is priority allocation, to be specific, an uplink grant resource is preferentially allocated to the service data with the high-priority scheduling indication.
   Specifically, a plurality of terminals may send an SR to a same base station. Even if a same terminal has various types of service data to be sent, various types of SRs may also be sent to the base station on logical channels on which different pieces of service data are located. Therefore, the base station may receive the various types of SRs at the same time.
   In this embodiment, if the terminal sets an SR as an enhanced SR when sending the URLLC service data, the enhanced SR carries a high-priority scheduling indication, after receiving the enhanced SR that includes the high-priority scheduling indication, the base station can determine that a priority of service data corresponding to the SR is relatively high, and preferentially allocate an uplink grant resource to the enhanced SR, thereby reducing a waiting latency of the scheduling procedure. With reference to the existing scheduling procedure shown in FIG. 1, the rapid allocation manner can shorten a processing process of delivering a UL grant in step 2 of the scheduling procedure.
4. A fourth rapid allocation manner is pre-allocation, to be specific, an uplink grant resource is pre-allocated to the service data with the high-priority scheduling indication.

As described above, the terminal continuously sends the enhanced SR to the base station based on a particular sending cycle. After the base station receives the enhanced SR, if the enhanced SR carries the high-priority scheduling indication, based on allocating an uplink grant resource of a corresponding size to the enhanced SR, the base station further pre-allocates some uplink grant resources. In this way, after receiving a next enhanced SR sent by the terminal, the base station may directly send a pre-allocated uplink grant resource to the terminal, thereby saving a time of generating the uplink grant resource, and reducing the latency of the scheduling procedure. With reference to the existing scheduling procedure shown in FIG. 1, the rapid allocation manner can shorten a processing process of delivering a UL grant in step 2 of the scheduling procedure. Alternatively, the base station may also send the pre-allocated uplink grant resource to the terminal when sending the uplink grant resource corresponding to the enhanced SR. In this way, the terminal may not necessarily send an uplink grant resource requested by an SR, but directly send a BSR by using a pre-allocated uplink grant resource. With reference to the existing scheduling procedure shown in FIG. 1, in this way, a processing process of step 1 of sending an SR and step 2 of delivering a UL grant in the scheduling procedure can be omitted.

More specifically, a service source of the service data may be of various different types. The service source refers to a specific type of the service data. Data volumes of service data generated based on different types of service sources may be different. Therefore, the enhanced SR may further carry a service source type of the service data, to provide a more accurate basis for the base station to pre-allocate a data volume.

In an actual application, the base station may select any one or combination of more than one of the foregoing four rapid allocation manners. Each rapid allocation manner can reduce a latency to some extent. A larger quantity of selected rapid allocation manners can more greatly reduce the latency.

S403: The terminal uploads a BSR to the base station by using the UL grant.

It should be noted that, if the base station selects the first rapid scheduling manner, namely, separately allocating an uplink grant resource to the service data with the high-priority scheduling indication, after receiving an uplink grant resource with an allocation object indication, the terminal directly allocates the uplink grant resource to a logical channel corresponding to the allocation object indication. The allocation object indication is used to instruct to allocate the uplink grant resource to the URLLC service data. In this case, the terminal allocates, according to the allocation object indication, the uplink grant resource to the logical channel on which the URLLC service data is allocated, so that the uplink grant resource is used by the URLLC service data to upload the BSR.

S404: The base station sends a UL grant to the terminal. The UL grant is used by the terminal to upload service data.

S405: The terminal uploads the service data by using the UL grant.

After receiving the uplink grant resource UL grant delivered by the base station, the terminal uploads the URLLC service data by using the received uplink grant resource UL grant.

It can be learned from the foregoing technical solution that, if a bit is added to an SR to carry a high-priority scheduling indication in this embodiment, this embodiment is applicable to a scenario in which PUCCH resources are extendible. If an SR carries a high-priority scheduling indication in an implicit manner, this embodiment is applicable to a scenario in which PUCCH resources are relatively limited, but a requirement of to-be-sent service data on a latency is relatively high.

In this embodiment, the enhanced SR sent by the terminal carries the to-be-sent service data with the high-priority scheduling indication, and the base station rapidly allocates an uplink grant resource to the URLLC service data according to the high-priority indication. The rapid allocation manner can simplify the processing process (for example, steps with bold transverse lines in FIG. 4) of step 2 and/or step 3 in the existing scheduling procedure shown in FIG. 1, thereby reducing the latency of the existing scheduling procedure.

In Embodiment 2, the high-priority scheduling indication corresponding to the URLLC service data is carried in the enhanced SR in the explicit manner or the implicit manner. However, the high-priority scheduling indication may not be carried in the enhanced SR, but is carried in the BSR. Therefore, this application provides the following Embodiment 3 of sending a high-priority scheduling indication by using a BSR.

### Embodiment 3

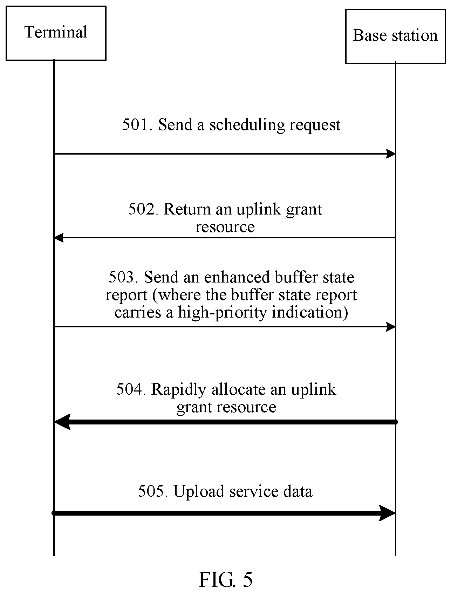

FIG. 5 shows a procedure of Embodiment 3 of a scheduling method according to this application. The scheduling method specifically includes the following step S501 to step S505.

S501: A terminal sends an SR to a base station when URLLC service data needs to be sent.

The SR may include only one bit as an SR in an existing scheduling procedure, for notifying the base station that the terminal needs to send service data.

S502: The base station sends a UL grant to the terminal.

The uplink grant resource UL grant is used by the terminal to upload a BSR.

S503: The terminal sends an enhanced BSR to the base station, where the enhanced BSR carries a high-priority scheduling indication corresponding to the URLLC service data.

When determining to send the URLLC service data, the terminal sets a high-priority scheduling indication for the URLLC service data, and adds the high priority a scheduling indication to the BSR. Specifically, the enhanced BSR may carry the high-priority scheduling indication in an explicit manner. For example, a bit is added to the BSR to indicate the high-priority scheduling indication. The enhanced BSR explicitly or implicitly carries more information than an existing BSR, and the enhanced BSR is essentially a BSR.

Alternatively, the enhanced BSR may carry the high-priority scheduling indication in an implicit manner. Specifically, the BSR is sent to the base station by using a physical uplink shared channel (Physical Uplink Shared Channel, PUSCH), and the BSR has location information on the PUSCH resource during sending of the BSR. The terminal and the base station may agree on a location corresponding to high-priority service data in advance. When sending the URLLC service data, the terminal may send a BSR at the preset location on the PUSCH resource. In this way, after receiving the BSR, the base station may determine, based on information about the location of the BSR on the PUSCH resource, that the BSR carries the high-priority scheduling indication. For a description of the high-priority scheduling indication, refer to the description in Embodiment 2. Details are not described herein again.

S504: The base station allocates a UL grant to the terminal in a rapid allocation manner based on the high-priority scheduling indication carried in the enhanced BSR.

If the enhanced BSR carries the high-priority scheduling indication in the explicit manner, after receiving the enhanced BSR, the base station may detect whether the enhanced BSR includes a priority indication and a bit with the priority indication being high. If yes, an uplink resource is allocated to the terminal in a preset rapid allocation manner. For a description of the rapid allocation manner, refer to the description in Embodiment 2. Details are not described herein again.

It should be noted that, the base station may rapidly allocate the uplink grant resource to the terminal based on the high-priority scheduling indication, and a difference from Embodiment 2 is that the rapidly allocated uplink grant resource is a second uplink grant resource. In this embodiment, if the first rapid allocation manner in Embodiment 2 is used, a processing process of step 5 in the existing scheduling procedure can be simplified, and if any one of the last three rapid allocation manners is used, a processing process of step 4 in the existing scheduling procedure can be simplified.

S505: The terminal uploads to-be-sent service data by using the UL grant.

The service data is URLLC service data.

It can be learned from the foregoing technical solution that, in this embodiment, no information needs to be added to the SR. Therefore, this embodiment may be applied to a scenario in which PUCCH resources are limited but a requirement on a latency of to-be-sent service data is relatively high.

As in Embodiment 2, in this embodiment, a high-priority scheduling indication of to-be-sent service data is also sent. Therefore, the processing process (for example, steps with bold transverse lines in the figure) of step 4 and/or step 5 in the existing scheduling procedure can be simplified. Different from Embodiment 2, in this embodiment, the high-priority scheduling indication is carried in the BSR, instead of being carried in the SR.

In Embodiment 1, the buffer state information in the BSR is carried in the SR, to omit step 2 and step 3. In Embodiment 2, the high-priority scheduling indication is sent by using the SR, to instruct the base station to rapidly deliver the first uplink grant resource, to simplify a procedure of step 2 and/or step 3. In Embodiment 3, the high-priority scheduling indication is sent by using the BSR, to instruct the base station to rapidly deliver the first uplink grant resource, to simplify a procedure of step 4 and/or step 5. There is no conflict among implementations of these embodiments. Therefore, any two or three of the implementations may be combined, to more greatly reduce the latency of the existing scheduling procedure.

### Embodiment 4

The foregoing embodiments are improvements of steps 3 to 5 in the existing scheduling procedure. It is found through research by the inventor that, it may further be considered to optimize step 1 (of sending an SR) and step 2 (of sending a UL grant). Based on this inventive concept, this application provides the following Embodiment 4.

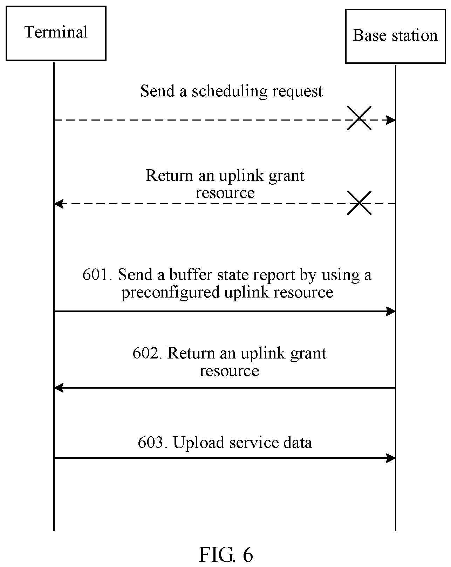

FIG. 6 shows a procedure of Embodiment 4 of a scheduling method according to this application. The scheduling method specifically includes the following step S601 to step S603.

S601: A terminal sends a BSR to a base station by using a preconfigured uplink resource when needing to send URLLC service data.

The base station may pre-allocate some uplink grant resources to the URLLC service data. For example, the base station pre-allocates uplink grant resources to the terminal before a scheduling procedure. These uplink grant resources are specially used for the URLLC service data, and therefore, may be referred to as uplink grant resources. In an implementation, uplink shared resources may further be preconfigured on the terminal. The uplink shared resources are provided for various types of service data for use, and are not specially provided for the URLLC service data to use. The terminal may contend for these uplink shared resources, and after obtaining these uplink shared resources through contention, the terminal may send the BSR by using an uplink shared resource.

Either a preconfigured uplink grant resource or a preconfigured uplink shared resource can be referred to as a pre-allocated uplink resource (or a prestored uplink resource).

When needing to send the URLLC service data, the terminal selects one resource from the pre-allocated uplink resources, to send the BSR. This manner of sending a BSR by using a pre-allocated uplink resource may be referred to as a BSR enhancement manner.

That the terminal can implement the foregoing function may be achieved based on a configuration of the base station. For the configuration manner, refer to the process of configuring the enhanced SR by the base station. The following only provides a brief description.

The base station may send an RRC connection reconfiguration message to the terminal in a connection process before the scheduling procedure. The RRC connection reconfiguration message may include enhanced indication information, used to instruct the terminal to send the BSR in the BSR enhancement manner.

S602: The base station allocates a UL grant to the terminal based on buffer state information carried in the BSR.

The UL grant is used to send an uplink grant resource of service data.

S603: The terminal sends service data to the base station by using the UL grant.

The terminal sends the URLLC service data to the base station by using the uplink grant resource UL grant.

It can be learned from the foregoing technical solution that, in the existing scheduling procedure, the terminal needs to apply for the UL grant from the base station by using the SR. In this embodiment, the terminal pre-stores the uplink resources, and can directly randomly select one resource from these resources to send the BSR, thereby omitting step 1 of sending an SR and step 2 of sending a UL grant (steps with dotted lines and crosses shown in FIG. 6 are omitted steps), thereby reducing the latency of the scheduling procedure.

In addition, it not necessary to occupy more PUCCH resources in this embodiment than in the enhancement manner of adding a bit to an SR. Specifically, the terminal needs to send the SR by using the PUCCH resource, and when more bits are included in the SR, more PUCCH resources need to be used. However, in the scheduling procedure, PUCCH resources for communicating with the base station are limited, and can be provided for a plurality of terminals to use. A larger quantity of PUCCH resources occupied by a single terminal indicates a smaller quantity of terminals that communicate with the base station.

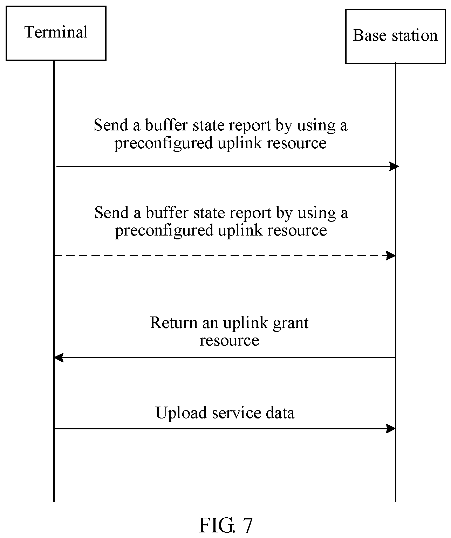

It should be noted that, in Embodiment 4, the terminal may send the BSR in a manner of contending for an uplink resource for use. To be specific, if a plurality of terminals all need to send a BSR, the plurality of terminals contend for an uplink resource. In this way, if a terminal sends URLLC service data, the BSR of the terminal may be caused to have a conflict with another terminal in the contention. Consequently, a success rate of sending the BSR corresponding to the URLLC service data is relatively low. Therefore, to meet a requirement of a URLLC service on data reliability, the BSR may be repeatedly sent in a preconfigured BSR repeated sending mode. As shown in FIG. 7, a preset BSR repeated sending is a mode in which a same BSR is repeatedly sent for a plurality of times.

It should be noted that, the mode of repeatedly sending a same BSR may be used in combination not only with Embodiment 4, and the mode can be used in any embodiment in which there is a BSR to be sent, to alleviate impact of channel fading, and further increase a success rate of receiving a BSR in a contention-based sending manner.

A specific BSR sending mode may include but is not limited to the following modes. In an actual application, which sending mode is to be used may be determined by the terminal, or may be determined by the base station, to be specific, the base station sets a sending mode in the RRC connection reconfiguration message. The terminal receives the RRC connection reconfiguration message, and repeatedly sends the BSR based on the sending mode included in the RRC connection reconfiguration message.
1. Dual connectivity (Dual Connectivity, DC) mode.
   The mode is similar to multiplexing of a frequency domain resource, and a same BSR is sent in a plurality of connections between the terminal and the base station. A specific quantity of connections may be included in the RRC connection reconfiguration message.
2. Carrier aggregation (Carrier Aggregation, CA) mode.
   The mode is similar to multiplexing of a frequency domain resource, and a same BSR is sent on a plurality of carriers. A specific quantity of carriers may be included in the RRC connection reconfiguration message.
3. Transmission time interval-bundling (Transmission Time Interval-bundling, TTI-bundling) mode.
   The mode is similar to multiplexing of a time domain, and a same BSR is sent in a plurality of TTI-bundlings. A specific quantity of TTI-bundlings may be included in the RRC connection reconfiguration message.
4. Multi-beam (Multi-beam) mode.

The mode is similar to multiplexing of a space domain, and a same BSR is sent in a plurality of beams beams. A specific quantity of beams may be included in the RRC connection reconfiguration message.

It should be noted that, the foregoing manner of repeatedly sending the BSR can increase a success rate of sending the BSR, thereby improving reliability of a service data transmission process. However, a larger quantity of sending times indicates a longer time required by the terminal and the base station to process the BSR. This leads to an increase in the latency of the scheduling procedure. Therefore, to achieve a balance between the latency and the reliability, an appropriate quantity of repeated sending times need to be selected based on an actual application requirement. The appropriate quantity of repeated sending times may be selected by the terminal or the base station. This is not specifically limited in this application.

### Embodiment 5

In some of the foregoing embodiments, an SR is improved, and in some of the foregoing embodiments, a BSR is improved. For example, in Embodiment 1, buffer state information of an original BSR may be added to an SR. In Embodiment 2, a high-priority scheduling indication of a to-be-sent service may be added to an SR. In Embodiment 3, a high-priority scheduling indication of a to-be-sent service may be added to a BSR. In Embodiment 4, a BSR is sent by using a preconfigured uplink resource.

It should be noted that, a PUCCH resource needs to be used to send the SR. However, the resource is a dedicated resource with a limited quantity. To be specific, the base station allocates respective PUCCH resources to each terminal, and the allocated PUCCH resources are limited. If an SR sent by a terminal carries more information, more PUCCH resources need to be consumed. Therefore, the sending may fail and a latency is relatively high due to limitations of the PUCCH resources. On the other hand, there is a conflict between allocation of the PUCCH resource to the terminal by the base station and allocation of another resource such as an uplink grant. If the PUCCH resource is always allocated to the terminal, allocation of another resource to the terminal may be affected, affecting another communication process.

It is found through research by the inventor that, sending of a BSR does not need to use the PUCCH resource, and therefore, may switch between an SR enhancement mode (a first scheduling mode) and a BSR enhancement mode (a second scheduling mode), to alleviate a tight demand of the SR for the PUCCH resource. A specific switching manner is described in the following Embodiment 5.

A function of the terminal may be set before a scheduling procedure of Embodiment 5 is performed, so that the terminal can switch between the two sending modes when performing the scheduling procedure.

Specifically, the terminal may generate a switching function enabling instruction, and enable a switching function according to the instruction. Alternatively, a switching function of the terminal is set by the base station. To be specific, in a connection process before the scheduling procedure, the base station may send an RRC connection reconfiguration message to the terminal. The RRC connection reconfiguration message may carry a switching function enabling instruction. The instruction is used to cause the terminal to enable the switching function. The terminal whose switching function is enabled can implement the following sending mode switching in Embodiment 5.

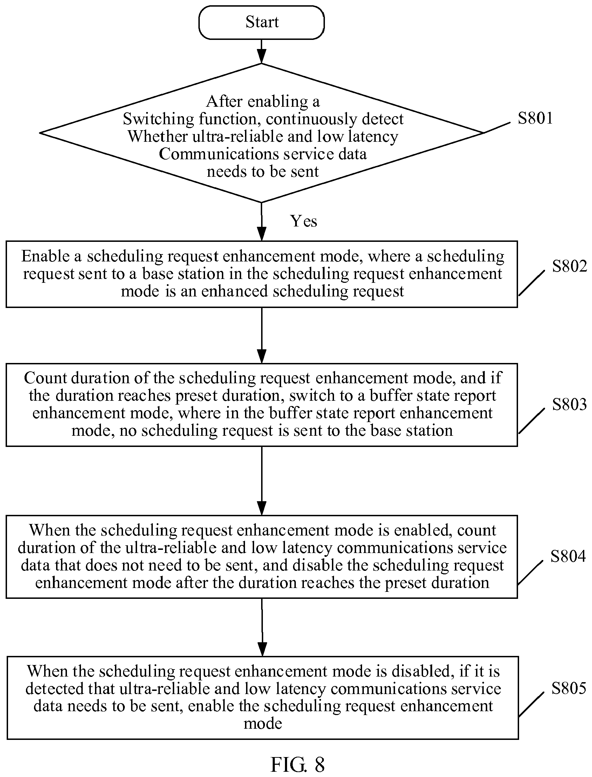

FIG. 8 shows a procedure of Embodiment 5 of an enhanced scheduling method according to this application. The scheduling method specifically includes the following step S801 to step S805.

S801: After enabling a switching function, a terminal continuously detects whether the terminal needs to send URLLC service data.

A time point at which the terminal enables the switching function may be before, when, or after a scheduling procedure is performed. For example, the terminal may receive an RRC connection reconfiguration message before the scheduling procedure, and enables the switching function when receiving the RRC connection reconfiguration message. For another example, the terminal enables the switching function when detecting that the scheduling procedure starts. For still another example, the terminal enables the switching function at a time point after the scheduling procedure starts. The time point may be determined by the terminal, or may be determined by the base station. For example, in addition to a switching function enabling instruction, the RRC connection reconfiguration message sent by the base station further includes a time point corresponding to the switching function enabling instruction. In this case, the terminal executes the switching function enabling instruction when the time point arrives, to cause the terminal to enable the switching function.

The terminal may generate a detection instruction after enabling the switching function. The terminal may perform the following scheduling procedure according to the detection instruction.

When service data needs to be sent, it is first determined whether the service data belongs to preset ultra-reliable low latency communications service data. If yes, it indicates that the terminal currently needs to send URLLC service data. If no, it indicates that the terminal currently does not need to send URLLC service data.

S802: If needing to send URLLC service data, the terminal enables an SR enhancement mode, to perform a scheduling procedure based on the SR enhancement mode. In the SR enhancement mode, an SR sent by the terminal to a base station is an enhanced SR.

If the service data is URLLC service data, the terminal needs to generate an enhanced SR, and sends the enhanced SR to the base station. Compared with an existing SR, in addition to indication information for sending service data, the enhanced SR further includes more information. The more information may be referred to as newly added information, and may include but is not limited to any one or combination of more than one of the following: buffer state information carried in an original BSR, a high-priority scheduling indication, and a type of service data (namely, the foregoing service resource).

It should be noted that, if the terminal enables the SR enhancement mode, it indicates that the terminal may perform the scheduling procedure based on the SR enhancement mode. Specifically, the enhanced SR includes different information, and specific performing processes of the SR enhancement mode are also different. If the enhanced SR sent by the terminal includes the buffer state information in the original BSR, the scheduling procedure in Embodiment 1 is performed. If the enhanced SR sent by the terminal includes the high-priority scheduling indication or the type of the service data (namely, the foregoing service source), the scheduling procedure in Embodiment 2 is performed.

The terminal sends the enhanced SR to the base station by using PUCCH resources, and the PUCCH resources used are more than those used for sending an existing SR. Therefore, this is applicable to a scenario in which the PUCCH resources are sufficient.

S803: The terminal counts duration of the SR enhancement mode, and if the duration reaches preset duration, the terminal switches to a BSR enhancement mode, to perform the scheduling procedure based on the BSR enhancement mode. In the BSR enhancement mode, the terminal sends no SR to the base station.

After switching to the SR enhancement mode in step S802, the terminal needs to count duration of the SR enhancement mode. It should be noted that, in this embodiment, in an actual application, the terminal may switch between the BSR enhancement mode and the SR enhancement mode for a plurality of times. The duration counted in this step is not total duration of the SR enhancement mode, but duration after the SR enhancement mode is enabled each time. In other words, each time after step S802 of switching to the SR enhancement mode is performed, the counted duration is set to zero.

A specific implementation of counting the duration of the SR enhancement mode may be timing by using a timer or counting an SR sending cycle. For example, the RRC connection reconfiguration message sent by the base station to the terminal includes a timer (for example, an SR enhancement cycle timer, SR Enhancement Cycle Timer) and an SR sending cycle, and the terminal continuously sends an enhanced SR based on the SR sending cycle. After switching to the SR enhancement mode, the terminal starts the timer for timing or counts a quantity of SR sending cycles, to implement timing.

If the counted duration of the SR enhancement mode reaches preset duration (first preset duration), the terminal switches to the BSR enhancement mode. The terminal may perform the scheduling procedure based on the BSR enhancement mode. Importantly, in the sending mode, the terminal sends no SR to the base station, thereby reducing use of the PUCCH resources. The BSR enhancement mode may be the process in Embodiment 4.

S804: When the SR enhancement mode is enabled, if URLLC service data does not need to be sent, duration of the URLLC service data that does not need to be sent is counted, and the terminal disables the SR enhancement mode after the duration reaches the preset duration.

For ease of distinguishing, the duration counted in step S803 may be referred to as first duration, and the preset duration used for comparison is referred to as first preset duration, the duration counted in this step is referred to as second duration, and the preset duration used for comparison is referred to as second preset duration. Values of the first preset duration and the second preset duration may be the same or may be different. This is not specifically limited in this application.

A manner of counting the second duration may be the same as a manner of counting the first duration. For example, timing is performed by using the timer or the SR sending cycle is counted. For a specific description, refer to a description of the first duration. Details are not described herein again.

When the terminal is in the SR enhancement mode, if the terminal does not need to send URLLC service data for a long period of time, the terminal may disable the SR enhancement mode, to reduce use of the PUCCH resources.

S805: When the SR enhancement mode is disabled, if the terminal detects that URLLC service data needs to be sent, the terminal enables the SR enhancement mode, to perform the scheduling procedure based on the SR enhancement mode.

When the SR enhancement mode is disabled, if the terminal detects that URLLC service data needs to be sent, the BSR enhancement mode may be temporarily performed. In the BSR enhancement mode, as described above, no SR is sent to the base station, thereby reducing use of the PUCCH resources. When the SR enhancement mode is disabled, if the terminal detects that URLLC service data needs to be sent, the terminal may alternatively re-enable the SR enhancement mode, to perform the scheduling procedure based on the SR enhancement mode.

It can be learned from the foregoing technical solution that, the terminal switches to the BSR enhancement mode after the SR enhancement mode lasts for particular duration, to reduce use of the PUCCH resources. When there is no URLLC service data being sent within a period of time, the terminal may disable the SR enhancement mode, and re-enable the SR enhancement mode when there is URLLC service data being sent. The SR enhancement mode needs to use a relatively large quantity of PUCCH resources. Therefore, the terminal switches to the BSR enhancement mode or disables the SR enhancement mode, to save the PUCCH resources.

It should be noted that, in the foregoing embodiments, an enhanced scheduling procedure is described from a perspective of service data. For example, it is determined that a condition for performing an enhanced scheduling procedure is that there is service data of a to-be-sent URLLC service. In this way, it can be ensured that the enhanced scheduling procedure can be performed when a type of service data such as service data of a URLLC service is sent, to reduce a scheduling latency corresponding to the type of service data.

However, in this application, the enhanced scheduling procedure may alternatively be performed from a perspective of a logical channel. For example, it is determined that a condition for performing the enhanced scheduling procedure is that there is to-be-sent service data on a logical channel, so that the logical channel can be distinguished from another logical channel, and the enhanced scheduling procedure is performed, to reduce the scheduling latency corresponding to the logical channel. When the technical solution of this application is described from the perspective of the logical channel, all settings corresponding to the URLLC service are converted to settings corresponding to a target logical channel. For example, the high-priority scheduling indication is not an indication corresponding to the service data of the URLLC service, but an indication corresponding to the target logical channel.

For ease of description, the logical channel may be referred to as a target logical channel. The service data of the URLLC service may be sent on the target logical channel. Certainly, another type of service data may also be sent on the target logical channel. In addition, in this application, the target logical channel on the terminal is which logical channel is not limited. The target logical channel may be a logical channel specified by the base station, or the target logical channel may be specified by the terminal. For example, the terminal specifies any logical channel as the target logical channel. For another example, the terminal specifies a logical channel meeting a preset condition as the target logical channel. A specific implementation of specifying the logical channel meeting the preset condition as the target logical channel is as follows.

The terminal determines whether a target parameter of the logical channel reaches a threshold corresponding to the target parameter, and if yes, specifies the logical channel as the target logical channel. The target parameter may be a parameter obtained in advance, or may be a parameter collected in real time.

In an example, the target parameter may be a buffer data volume, and the threshold corresponding to the target parameter is a buffer data volume threshold. In another example, the target parameter is a rate of data that arrives at a buffer unit of the logical channel, and the threshold corresponding to the target parameter is a rate threshold. In still another example, the target parameter is duration in which no available resource is allocated to the data in the buffer unit of the logical channel, and the threshold corresponding to the target parameter is a duration threshold. Certainly, there may be another case for the target parameter and the threshold corresponding to the target parameter. This is not specifically limited in this application. In addition, the threshold corresponding to the target parameter may be preconfigured by the base station, or may be set based on a related parameter in a communication protocol. This is not specifically limited in this application.

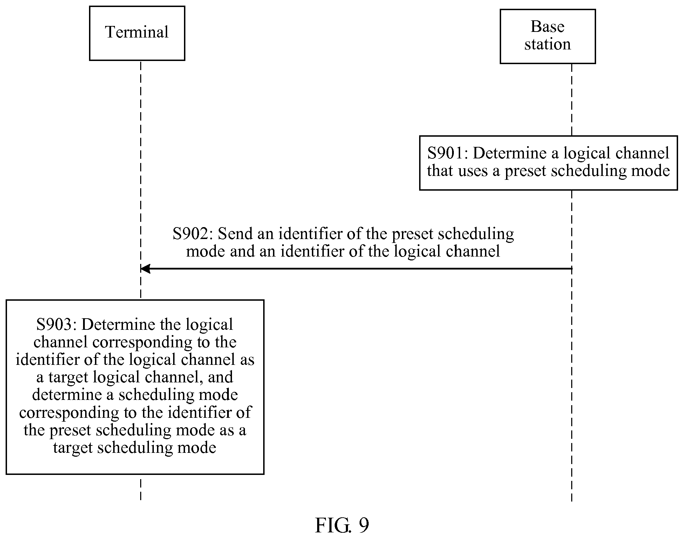

It should be noted that, in addition to specifying the target logical channel for the terminal, the base station may further specify a to-be-used enhanced scheduling method for the terminal. For this, this application provides a scheduling configuration method. As shown in FIG. 9, the scheduling configuration method may include step S901 to step S903.

S901: The base station determines a logical channel that uses a preset scheduling mode. The preset scheduling mode is any one of the following three modes: a first scheduling mode, a second scheduling mode, and a mode switching between the first scheduling mode and the second scheduling mode.

The first scheduling mode is a scheduling mode in which the terminal sends an enhanced scheduling request to the base station, and is also a scheduling mode in which the base station receives a scheduling request sent by the terminal. The enhanced scheduling request carries any one or more of the following: a scheduling indication, buffer state information, and a type of the service data. When the first scheduling mode includes the buffer state information, the first scheduling mode is the enhanced scheduling method in Embodiment 1. When the first scheduling mode includes the high-priority scheduling indication or the type of the service data, the first scheduling mode is the enhanced scheduling method in Embodiment 2.

The second scheduling mode is a scheduling mode in which the terminal sends a buffer state report to the base station by using a prestored uplink resource, namely, the enhanced scheduling method in Embodiment 4, and is also a scheduling mode in which the base station receives the buffer state report sent by the terminal by using the prestored uplink resource.

The mode switching between the first scheduling mode and the second scheduling mode is the enhanced scheduling method in Embodiment 5.

S902: The base station sends an identifier of the preset scheduling mode and an identifier of the logical channel to the terminal.

The base station may add the identifier of the preset scheduling mode and the identifier of the logical channel to a logical channel connection reconfiguration message, a physical downlink control channel resource, or a medium access control control element, and send the logical channel connection reconfiguration message, the physical downlink control channel resource, or the medium access control control element to the terminal. Certainly, the base station may alternatively add the identifier of the preset scheduling mode and the identifier of the logical channel to another existing message or resource, and send the another existing message or resource to the terminal. Alternatively, the base station may directly send the identifier of the preset scheduling mode and the identifier of the logical channel to the terminal.

S903: The terminal determines the logical channel corresponding to the identifier of the logical channel as a target logical channel, and determines a scheduling mode corresponding to the identifier of the preset scheduling mode as a target scheduling mode.

The terminal may obtain the two identifiers based on a manner in which the base station sends the identifier of the preset scheduling mode and the identifier of the logical channel. Further, the terminal determines the logical channel indicated by the identifier of the logical channel as the target logical channel, and determines the scheduling mode corresponding to the identifier of the preset scheduling mode as the target scheduling mode, to perform an enhanced scheduling method corresponding to the target scheduling mode.

In the scheduling configuration method provided in this application, the base station may configure the terminal, so that the terminal can implement the scheduling method corresponding to the determined scheduling mode.

In addition, this application further provides a terminal, including a processing module, a sending module, and a receiving module.

The processing module is configured to determine whether there is to-be-sent service data on a target logical channel.

The sending module is configured to send a scheduling indication to a base station if the processing module determines that there is to-be-sent service data on the target logical channel, where the target logical channel is a logical channel specified by the base station, and the scheduling indication is used to instruct the base station to allocate an uplink grant resource to the target logical channel in a preset allocation manner.

The receiving module is configured to receive the uplink grant resource sent by the base station.

In an implementation, when performing the step of sending the scheduling indication to the base station, the sending module is specifically configured to send a scheduling request to the base station, where the scheduling request carries the scheduling indication by using a bit.

In an implementation, when performing the step of sending the scheduling indication to the base station, the sending module is specifically configured to send a scheduling request to the base station based on a preset scheduling request sending cycle, where the preset scheduling request sending cycle is less than a scheduling request sending cycle of a logical channel other than the target logical channel.

In an implementation, when performing the step of sending the scheduling indication to the base station, the sending module is specifically configured to send a buffer state report to the base station, where the buffer state report carries the scheduling indication by using a bit.

In an implementation, when performing the step of sending the scheduling indication to the base station, the sending module is specifically configured to send a buffer state report to the base station at a preset location on a physical uplink shared channel.

This application further provides a terminal, including a processing module, a sending module, and a receiving module.

The processing module is configured to generate a scheduling request if there is to-be-sent service data on a target logical channel, where the target logical channel is a logical channel specified by a base station, and the scheduling request includes buffer state information.

The sending module is configured to send the scheduling request to the base station, where the buffer state information in the scheduling request is used by the base station to allocate an uplink grant resource.

The receiving module is configured to receive the uplink grant resource sent by the base station.

In an implementation, the buffer state information includes data volume indication information, and the data volume indication information includes:
a data volume value of the service data; or a data volume index of the service data, where the data volume index is used to indicate a data volume range of the service data.

This application further provides a terminal, including a processing module, a sending module, and a receiving module.

The processing module is configured to determine whether there is to-be-sent service data on a target logical channel.

The sending module is configured to send a buffer state report to a base station by using a preconfigured uplink resource if the processing module determines that there is to-be-sent service data on the target logical channel, where the target logical channel is a logical channel specified by the base station, and the buffer state report is used by the base station to allocate an uplink grant resource to the target logical channel.

The receiving module is configured to receive the uplink grant resource sent by the base station.

In an implementation, when performing the step of sending the buffer state report to the base station by using the preconfigured uplink resource, the sending module is specifically configured to send the same buffer state report to the base station for a plurality of times by using the preconfigured uplink resource.

This application further provides a terminal, including a receiving module and a processing module.

The receiving module is configured to receive a detection instruction.

The processing module is configured to continuously detect, after the receiving module receive the detection instruction, whether there is to-be-sent service data on a target logical channel of the terminal, where the target logical channel is a logical channel specified by a base station.

The processing module is further configured to enable a preset first scheduling mode if there is to-be-sent service data on the target logical channel, where the first scheduling mode is a scheduling mode for sending a scheduling request, and the scheduling request carries any one or more of the following: a scheduling indication, buffer state information, and a type of the service data.

The processing module is further configured to switch the first scheduling mode to a preset second scheduling mode if enabled duration of the first scheduling mode reaches first preset duration, where the second scheduling mode is a scheduling mode for sending a buffer state report to the base station by using a prestored uplink resource.

In an implementation, the processing module is further configured to: after enabling the first scheduling mode, disable the first scheduling mode if there is no longer to-be-sent service data on the target logical channel and duration without the service data reaches second preset duration.

In an implementation, the processing module is further configured to: after disabling the first scheduling mode, enable the first scheduling mode if detecting that there is to-be-sent service data on the target logical channel.

This application further provides a base station, including a receiving module, a processing module, and a sending module.

The receiving module is configured to receive a scheduling indication sent by a terminal, where the scheduling indication is sent when there is to-be-sent service data on a target logical channel of the terminal, and the target logical channel is a logical channel specified by the base station or the terminal.

The processing module is configured to allocate an uplink grant resource to the target logical channel in a preset allocation manner.

The sending module is configured to send the uplink grant resource to the terminal.

In an implementation, when performing the step of allocating the uplink grant resource to the target logical channel in the preset allocation manner, the processing module is specifically configured to separately allocate the uplink grant resource to the target logical channel.

In an implementation, when performing the step of allocating the uplink grant resource to the target logical channel in the preset allocation manner, the processing module is specifically configured to allocate the uplink grant resource to the target logical channel after a preset short-time interval, where the short-time interval indicates that a time interval of the target logical channel for obtaining the uplink grant resource is shorter than a time interval of another logical channel.

In an implementation, when performing the step of allocating the uplink grant resource to the target logical channel in the preset allocation manner, the processing module is specifically configured to preferentially allocate the uplink grant resource to the target logical channel after uplink grant resource allocation requests corresponding to a plurality of logical channels are received.

In an implementation, when performing the step of allocating the uplink grant resource to the target logical channel in the preset allocation manner, the processing module is specifically configured to allocate, based on a data volume of service data on the target logical channel, more uplink grant resources to the target logical channel than to the data volume.

This application further provides a base station, including a processing module and a sending module.

The processing module is configured to determine a logical channel that uses a preset scheduling mode.

The sending module is configured to send an identifier of the preset scheduling mode and an identifier of the logical channel to a terminal.

The preset scheduling mode is any one of the following three modes: a first scheduling mode, a second scheduling mode, and a mode switching between the first scheduling mode and the second scheduling mode, the first scheduling mode is a scheduling mode in which the base station receives a scheduling request sent by the terminal, the scheduling request carries any one or more of the following: a scheduling indication, buffer state information, and a type of the service data, and the second scheduling mode is a scheduling mode in which the base station receives a buffer state report sent by the terminal by using a prestored uplink resource.

In an implementation, when performing the step of sending the identifier of the preset scheduling mode and the identifier of the logical channel to the terminal, the sending module is specifically configured to send a logical channel connection reconfiguration message to the terminal, where the logical channel connection reconfiguration message includes the identifier of the preset scheduling mode and the identifier of the logical channel.

In an implementation, when performing the step of sending the identifier of the preset scheduling mode and the identifier of the logical channel to the terminal, the sending module is specifically configured to send a physical downlink control channel resource to the terminal, where the physical downlink control channel resource includes the identifier of the preset scheduling mode and the identifier of the logical channel.

In an implementation, when performing the step of sending the identifier of the preset scheduling mode and the identifier of the logical channel to the terminal, the sending module is specifically configured to send a medium access control element to the terminal, where the medium access control element includes the identifier of the preset scheduling mode and the identifier of the logical channel.

This application further provides a terminal, including a receiving module and a processing module.

The receiving module is configured to receive an identifier of a preset scheduling mode and an identifier of a logical channel that are sent by a base station, where the preset scheduling mode is any one of the following three modes: a first scheduling mode, a second scheduling mode, and a mode switching between the first scheduling mode and the second scheduling mode, the first scheduling mode is a scheduling mode in which the terminal sends a scheduling request to the base station, the scheduling request carries any one or more of the following: a scheduling indication, buffer state information, and a type of the service data, and the second scheduling mode is a scheduling mode in which the terminal sends a buffer state report to the base station by using a prestored uplink resource.

The processing module is configured to: determine the logical channel corresponding to the identifier of the logical channel as a target logical channel, and determine a scheduling mode corresponding to the identifier of the preset scheduling mode as the scheduling mode used by the terminal.

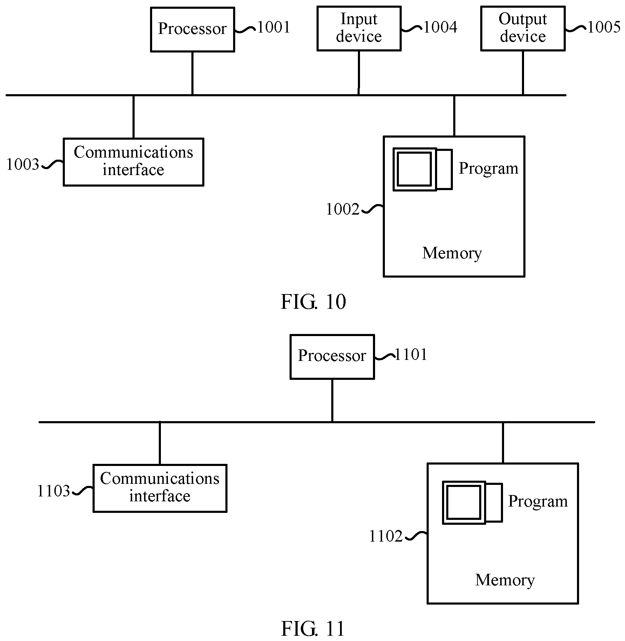

FIG. 10 is a possible schematic structural diagram of a terminal. The terminal includes:
a controller/processor 1001, a memory 1002, a communications interface 1003, an input device 1004, and an output device 1005. The processor 1001, the memory 1002, the communications interface 1003, the input device 1004, and the output device 1005 are connected to one another.

The controller/processor 1001 may be a general-purpose processor, for example, a central processing unit (CPU), a network processor (Network Processor, NP), or a microprocessor, or may be an application-specific integrated circuit (application-specific integrated circuit, ASIC), or one or more integrated circuits for controlling execution of programs of solutions of the present invention, or may be a digital signal processor (DSP), an application-specific integrated circuit (ASIC), a field programmable gate array (FPGA), or another programmable logical device, discrete gate or transistor logical device, or discrete hardware component. Alternatively, the controller/processor 1101 may be a combination of processors implementing a computing function, for example, a combination of one or more microprocessors, or a combination of the DSP and a microprocessor. Specifically:

The controller/processor 1001 of the terminal can implement a function of the processing module in the foregoing terminal, for performing the foregoing scheduling method applied to a terminal and/or for another process of a technology described in this application.

The memory 1002 stores a program for executing the technical solutions of this application, and may further store an operating system and another application program. Specifically, the program may include program code, and the program code includes a computer operation instruction. More specifically, the memory 1002 may be a read-only memory (read-only memory, ROM), a static storage device of another type that can store static information and an instruction, a random access memory (random access memory, RAM), a dynamic storage device of another type that can store information and an instruction, a magnetic disk storage, or the like.

The communications interface 1003 can implement functions of the sending module and the receiving module in the foregoing terminal. The communications interface 1003 includes any apparatus that uses a transceiver, so as to communicate with another device or a communications network, for example, the Ethernet, a radio access network (RAN), or a wireless local area network (WLAN).

The communications interface 1003 of the terminal may receive information such as a scheduling indication, a scheduling request, or a buffer state report sent by a base station, and send the received information to the controller/processor, and the controller/processor performs the foregoing scheduling method applied to a terminal. Alternatively, the communications interface 1003 of the terminal may receive an uplink grant resource or the like sent by a base station.

The input device 1004 may include an apparatus for receiving data and information input by a user, for example, a keyboard, a light pen, a voice input apparatus, or a touchscreen.

The output device 1005 may include an apparatus allowed to output information to the user, for example, a display screen, or a speaker.

FIG. 11 is a possible schematic structural diagram of a base station. The base station includes:
a controller/processor 1101, a memory 1102, and a communications interface 1103. The processor 1101, the memory 1102, and the communications interface 1103 are connected to one another.

The controller/processor 1101 may be a general-purpose processor, for example, a central processing unit (CPU), a network processor (Network Processor, NP), or a microprocessor, or may be an application-specific integrated circuit (application-specific integrated circuit, ASIC), or one or more integrated circuits for controlling execution of programs of solutions of the present invention, or may be a digital signal processor (DSP), an application-specific integrated circuit (ASIC), a field programmable gate array (FPGA), or another programmable logical device, discrete gate or transistor logical device, or discrete hardware component. Alternatively, the controller/processor 1101 may be a combination of processors implementing a computing function, for example, a combination of one or more microprocessors, or a combination of the DSP and a microprocessor. Specifically:

The controller/processor 1101 of the base station can implement a function of the processing module in the foregoing base station, for performing the foregoing scheduling method applied to a base station and/or for another process of a technology described in this application.

The memory 1102 stores a program for executing the technical solutions of this application, and may further store an operating system and another application program. Specifically, the program may include program code, and the program code includes a computer operation instruction. More specifically, the memory 1102 may be a read-only memory (read-only memory, ROM), a static storage device of another type that can store static information and an instruction, a random access memory (random access memory, RAM), a dynamic storage device of another type that can store information and an instruction, a magnetic disk storage, or the like.

The communications interface 1103 can implement functions of the sending module and the receiving module in the foregoing base station. The communications interface 1103 includes any apparatus that uses a transceiver, so as to communicate with another device or a communications network, for example, the Ethernet, a radio access network (RAN), or a wireless local area network (WLAN).

The communications interface 1103 of the base station may receive information such as a scheduling indication, a scheduling request, or a buffer state report sent by a terminal, and send the received information to the controller/processor, and the controller/processor performs the foregoing scheduling method applied to a base station. The communications interface 1103 of the base station may further send an uplink grant resource or the like to the terminal.

It should be noted that the embodiments in this specification are all described in a progressive manner, each embodiment focuses on a difference from other embodiments, and for same or similar parts in the embodiments, refer to these embodiments.

It should further be noted that in this specification, relational terms such as first and second are only used to distinguish one entity or operation from another, and do not necessarily require or imply that any actual relationship or sequence exists between these entities or operations. Moreover, the terms "include", "comprise", or any other variant is intended to cover a non-exclusive inclusion, so that a process, a method, an article, or a device that includes a list of elements not only includes those elements but also includes other elements that are not expressly listed, or further includes elements inherent to such a process, method, article, or device. An element preceded by "includes a ..." does not, without more constraints, preclude the presence of additional identical elements in the process, method, article, or device that includes the element.

The embodiments disclosed above are described to enable a person skilled in the art to implement or use this application. Various modifications made to the embodiments will be obvious to a person skilled in the art, and the general principles defined herein may also be implemented in other embodiments without departing from the spirit or scope of this application. Therefore, this application is not intended to be limited to these embodiments illustrated in this specification, but shall be construed in the widest scope consistent with the principles and novel features disclosed in this specification.

## Claims

1. A scheduling method, applied to a terminal, wherein the method comprises:
sending a scheduling indication to a base station if there is to-be-sent service data on a target logical channel, wherein the target logical channel is a logical channel specified by the base station or the terminal, and the scheduling indication is used to instruct the base station to allocate an uplink grant resource to the target logical channel in a preset allocation manner; and
receiving the uplink grant resource sent by the base station.

2. The scheduling method according to claim 1, wherein the sending a scheduling indication to a base station comprises:
sending a scheduling request to the base station, wherein the scheduling request carries the scheduling indication by using a bit.

3. The scheduling method according to claim 1, wherein the sending a scheduling indication to a base station comprises:
sending a scheduling request to the base station based on a preset scheduling request sending cycle, wherein the preset scheduling request sending cycle is less than a scheduling request sending cycle of a logical channel other than the target logical channel.

4. The scheduling method according to claim 1, wherein the sending a scheduling indication to a base station comprises:
sending a buffer state report to the base station, wherein the buffer state report carries the scheduling indication by using a bit.

5. The scheduling method according to claim 1, wherein the sending a scheduling indication to a base station comprises:
sending a buffer state report to the base station at a preset location on a physical uplink shared channel.

6. A scheduling method, applied to a terminal, wherein the method comprises:
generating a scheduling request if there is to-be-sent service data on a target logical channel, wherein the target logical channel is a logical channel specified by a base station or the terminal, and the scheduling request comprises buffer state information;
sending the scheduling request to the base station, wherein the buffer state information in the scheduling request is used by the base station to allocate an uplink grant resource; and
receiving the uplink grant resource sent by the base station.

7. The scheduling method according to claim 6, wherein the buffer state information comprises data volume indication information, and the data volume indication information comprises:
a data volume value of the service data; or
a data volume index of the service data, wherein the data volume index is used to indicate a data volume range of the service data.

8. A scheduling method, applied to a terminal, wherein the method comprises:
sending a buffer state report to a base station by using a preconfigured uplink resource if there is to-be-sent service data on a target logical channel, wherein the target logical channel is a logical channel specified by the base station or the terminal, and the buffer state report is used by the base station to allocate an uplink grant resource to the target logical channel; and
receiving the uplink grant resource sent by the base station.

9. The scheduling method according to claim 8, wherein the sending a buffer state report to a base station by using a preconfigured uplink resource comprises:
sending the same buffer state report to the base station for a plurality of times by using the preconfigured uplink resource.

10. A scheduling method, applied to a terminal, wherein the method comprises:
continuously detecting, after a detection instruction is received, whether there is to-be-sent service data on a target logical channel of the terminal, wherein the target logical channel is a logical channel specified by a base station or the terminal;
enabling a preset first scheduling mode if there is to-be-sent service data on the target logical channel, wherein the first scheduling mode is a scheduling mode for sending a scheduling request, and the scheduling request carries any one or more of the following: a scheduling indication, buffer state information, and a type of the service data;
switching the first scheduling mode to a preset second scheduling mode if enabled duration of the first scheduling mode reaches first preset duration, wherein the second scheduling mode is a scheduling mode for sending a buffer state report to the base station by using a prestored uplink resource; and
disabling the first scheduling mode if there is no to-be-sent service data on the target logical channel, and re-enabling the first scheduling mode when there is to-be-sent service data on the target logical channel.

11. The scheduling method according to claim 10, further comprising:
after the first scheduling mode is enabled, disabling the first scheduling mode if there is no longer to-be-sent service data on the target logical channel and duration without the service data reaches second preset duration.

12. The scheduling method according to claim 11, further comprising:
after the first scheduling mode is disabled, enabling the first scheduling mode if it is detected that there is to-be-sent service data on the target logical channel.

13. A scheduling method, applied to a base station, wherein the method comprises:
receiving a scheduling indication sent by a terminal, wherein the scheduling indication is sent when there is to-be-sent service data on a target logical channel of the terminal, and the target logical channel is a logical channel specified by the base station or the terminal;
allocating an uplink grant resource to the target logical channel in a preset allocation manner; and
sending the uplink grant resource to the terminal.

14. The scheduling method according to claim 13, wherein the allocating an uplink grant resource to the target logical channel in a preset allocation manner comprises:
separately allocating the uplink grant resource to the target logical channel.

15. The scheduling method according to claim 13, wherein the allocating an uplink grant resource to the target logical channel in a preset allocation manner comprises:
allocating the uplink grant resource to the target logical channel after a preset short-time interval, wherein the short-time interval indicates that a time interval of the target logical channel for obtaining the uplink grant resource is shorter than a time interval of another logical channel.

16. The scheduling method according to claim 13, wherein the allocating an uplink grant resource to the target logical channel in a preset allocation manner comprises:
preferentially allocating the uplink grant resource to the target logical channel after uplink grant resource allocation requests corresponding to a plurality of logical channels are received.

17. The scheduling method according to claim 13, wherein the allocating an uplink grant resource to the target logical channel in a preset allocation manner comprises:
allocating, based on a data volume of service data on the target logical channel, more uplink grant resources to the target logical channel than to the data volume.

18. A scheduling configuration method, applied to the base station, wherein the method comprises:
determining a logical channel that uses a preset scheduling mode; and
sending an identifier of the preset scheduling mode and an identifier of the logical channel to a terminal, wherein
the preset scheduling mode is any one of the following three modes: a first scheduling mode, a second scheduling mode, and a mode switching between the first scheduling mode and the second scheduling mode, the first scheduling mode is a scheduling mode in which the base station receives a scheduling request sent by the terminal, the scheduling request carries any one or more of the following: a scheduling indication, buffer state information, and a type of the service data, and the second scheduling mode is a scheduling mode in which the base station receives a buffer state report sent by the terminal by using a prestored uplink resource.

19. The scheduling configuration method according to claim 18, wherein the sending an identifier of the preset scheduling mode and an identifier of the logical channel to the terminal comprises:
sending a logical channel connection reconfiguration message to the terminal, wherein the logical channel connection reconfiguration message comprises the identifier of the preset scheduling mode and the identifier of the logical channel.

20. The scheduling configuration method according to claim 18, wherein the sending an identifier of the preset scheduling mode and an identifier of the logical channel to the terminal comprises:
sending a physical downlink control channel resource to the terminal, wherein the physical downlink control channel resource comprises the identifier of the preset scheduling mode and the identifier of the logical channel.

21. The scheduling configuration method according to claim 18, wherein the sending an identifier of the preset scheduling mode and an identifier of the logical channel to the terminal comprises:
sending a medium access control element to the terminal, wherein the medium access control element comprises the identifier of the preset scheduling mode and the identifier of the logical channel.

22. A scheduling configuration method, applied to a terminal, wherein the method comprises:
receiving an identifier of a preset scheduling mode and an identifier of a logical channel that are sent by a base station, wherein the preset scheduling mode is any one of the following three modes: a first scheduling mode, a second scheduling mode, and a mode switching between the first scheduling mode and the second scheduling mode, the first scheduling mode is a scheduling mode in which the terminal sends a scheduling request to the base station, the scheduling request carries any one or more of the following: a scheduling indication, buffer state information, and a type of the service data, and the second scheduling mode is a scheduling mode in which the terminal sends a buffer state report to the base station by using a prestored uplink resource; and
determining the logical channel corresponding to the identifier of the logical channel as a target logical channel, and determining a scheduling mode corresponding to the identifier of the preset scheduling mode as the scheduling mode used by the terminal.

23. A terminal, comprising:
a processing module, configured to determine whether there is to-be-sent service data on a target logical channel;
a sending module, configured to send a scheduling indication to a base station if the processing module determines that there is to-be-sent service data on the target logical channel, wherein the target logical channel is a logical channel specified by the base station or the terminal, and the scheduling indication is used to instruct the base station to allocate an uplink grant resource to the target logical channel in a preset allocation manner; and
a receiving module, configured to receive the uplink grant resource sent by the base station.

24. The terminal according to claim 23, wherein that the sending module sends the scheduling indication to the base station comprises:
the sending module is configured to send a scheduling request to the base station, wherein the scheduling request carries the scheduling indication by using a bit.

25. The terminal according to claim 23, wherein that the sending module sends the scheduling indication to the base station comprises:
the sending module is configured to send a scheduling request to the base station based on a preset scheduling request sending cycle, wherein the preset scheduling request sending cycle is less than a scheduling request sending cycle of a logical channel other than the target logical channel.

26. The terminal according to claim 23, wherein that the sending module sends the scheduling indication to the base station comprises:
the sending module is configured to send a buffer state report to the base station, wherein the buffer state report carries the scheduling indication by using a bit.

27. The terminal according to claim 23, wherein that the sending module sends the scheduling indication to the base station comprises:
the sending module is configured to send a buffer state report to the base station at a preset location on a physical uplink shared channel.

28. A terminal, comprising:
a processing module, configured to generate a scheduling request if there is to-be-sent service data on a target logical channel, wherein the target logical channel is a logical channel specified by a base station or the terminal, and the scheduling request comprises buffer state information;
a sending module, configured to send the scheduling request to the base station, wherein the buffer state information in the scheduling request is used by the base station to allocate an uplink grant resource; and
a receiving module, configured to receive the uplink grant resource sent by the base station.

29. The terminal according to claim 28, wherein the buffer state information comprises data volume indication information, and the data volume indication information comprises:
a data volume value of the service data; or
a data volume index of the service data, wherein the data volume index is used to indicate a data volume range of the service data.

30. A terminal, comprising:
a processing module, configured to determine whether there is to-be-sent service data on a target logical channel;
a sending module, configured to send a buffer state report to a base station by using a preconfigured uplink resource if the processing module determines that there is to-be-sent service data on the target logical channel, wherein the target logical channel is a logical channel specified by the base station or the terminal, and the buffer state report is used by the base station to allocate an uplink grant resource to the target logical channel; and
a receiving module, configured to receive the uplink grant resource sent by the base station.

31. The terminal according to claim 30, wherein that the sending module sends the buffer state report to the base station by using the preconfigured uplink resource comprises:
the sending module is further configured to send the same buffer state report to the base station for a plurality of times by using the preconfigured uplink resource.

32. A terminal, comprising:
a receiving module, configured to receive a detection instruction; and
a processing module, configured to continuously detect, after the receiving module receive the detection instruction, whether there is to-be-sent service data on a target logical channel of the terminal, wherein the target logical channel is a logical channel specified by a base station or the terminal, wherein
the processing module is further configured to enable a preset first scheduling mode if there is to-be-sent service data on the target logical channel, wherein the first scheduling mode is a scheduling mode for sending a scheduling request, and the scheduling request carries any one or more of the following: a scheduling indication, buffer state information, and a type of the service data; and
the processing module is further configured to switch the first scheduling mode to a preset second scheduling mode if enabled duration of the first scheduling mode reaches first preset duration, wherein the second scheduling mode is a scheduling mode for sending a buffer state report to the base station by using a prestored uplink resource.

33. The terminal according to claim 32, wherein
the processing module is further configured to: after enabling the first scheduling mode, disable the first scheduling mode if there is no longer to-be-sent service data on the target logical channel and duration without the service data reaches second preset duration.

34. The terminal according to claim 33, further comprising:
the processing module is further configured to: after disabling the first scheduling mode, enable the first scheduling mode if detecting that there is to-be-sent service data on the target logical channel.

35. Abase station, comprising:
a receiving module, configured to receive a scheduling indication sent by a terminal, wherein the scheduling indication is sent when there is to-be-sent service data on a target logical channel of the terminal, and the target logical channel is a logical channel specified by the base station or the terminal;
a processing module, configured to allocate an uplink grant resource to the target logical channel in a preset allocation manner; and
a sending module, configured to send the uplink grant resource to the terminal.

36. The base station according to claim 35, wherein that the processing module allocates the uplink grant resource to the target logical channel in the preset allocation manner comprises:
the processing module is further configured to separately allocate the uplink grant resource to the target logical channel.

37. The base station according to claim 35, wherein that the processing module allocates the uplink grant resource to the target logical channel in the preset allocation manner comprises:
the processing module is further configured to allocate the uplink grant resource to the target logical channel after a preset short-time interval, wherein the short-time interval indicates that a time interval of the target logical channel for obtaining the uplink grant resource is shorter than a time interval of another logical channel.

38. The base station according to claim 35, wherein that the processing module allocates the uplink grant resource to the target logical channel in the preset allocation manner comprises:
the processing module is further configured to preferentially allocate the uplink grant resource to the target logical channel after the receiving module receives uplink grant resource allocation requests corresponding to a plurality of logical channels.

39. The base station according to claim 35, wherein that the processing module allocates the uplink grant resource to the target logical channel in the preset allocation manner comprises:
the processing module is further configured to allocate, based on a data volume of service data on the target logical channel, more uplink grant resources to the target logical channel than to the data volume.

40. Abase station, comprising:
a processing module, configured to determine a logical channel that uses a preset scheduling mode; and
a sending module, configured to send an identifier of the preset scheduling mode and an identifier of the logical channel to a terminal, wherein
the preset scheduling mode is any one of the following three modes: a first scheduling mode, a second scheduling mode, and a mode switching between the first scheduling mode and the second scheduling mode, the first scheduling mode is a scheduling mode in which the base station receives a scheduling request sent by the terminal, the scheduling request carries any one or more of the following: a scheduling indication, buffer state information, and a type of the service data, and the second scheduling mode is a scheduling mode in which the base station receives a buffer state report sent by the terminal by using a prestored uplink resource.

41. The base station according to claim 40, wherein that the sending module sends the identifier of the preset scheduling mode and the identifier of the logical channel to the terminal comprises:
the sending module is further configured to send a logical channel connection reconfiguration message to the terminal, wherein the logical channel connection reconfiguration message comprises the identifier of the preset scheduling mode and the identifier of the logical channel.

42. The base station according to claim 40, wherein that the sending module sends the identifier of the preset scheduling mode and the identifier of the logical channel to the terminal comprises:
the sending module is further configured to send a physical downlink control channel resource to the terminal, wherein the physical downlink control channel resource comprises the identifier of the preset scheduling mode and the identifier of the logical channel.

43. The base station according to claim 40, wherein that the sending module sends the identifier of the preset scheduling mode and the identifier of the logical channel to the terminal comprises:
the sending module is further configured to send a medium access control element to the terminal, wherein the medium access control element comprises the identifier of the preset scheduling mode and the identifier of the logical channel.

44. A terminal, comprising:
a receiving module, configured to receive an identifier of a preset scheduling mode and an identifier of a logical channel that are sent by a base station, wherein the preset scheduling mode is any one of the following three modes: a first scheduling mode, a second scheduling mode, and a mode switching between the first scheduling mode and the second scheduling mode, the first scheduling mode is a scheduling mode in which the terminal sends a scheduling request to the base station, the scheduling request carries any one or more of the following: a scheduling indication, buffer state information, and a type of the service data, and the second scheduling mode is a scheduling mode in which the terminal sends a buffer state report to the base station by using a prestored uplink resource; and
a processing module, configured to: determine the logical channel corresponding to the identifier of the logical channel as a target logical channel, and determine a scheduling mode corresponding to the identifier of the preset scheduling mode as the scheduling mode used by the terminal.
